# EUROPÄISCHE PATENTSCHRIFT

(11) **EP 1 306 117 B1**
(45) Veröffentlichungstag und Bekanntmachung des Hinweises auf die Patenterteilung: **22.03.2006**
(21) Anmeldenummer: 02022439.0
(22) Anmeldetag: 04.10.2002
(51) Int. Cl.: B01D 29/21

(54) **Filterelement, insbesondere für die Filtrierung von Flüssigkeiten**
Filter element, in particular for filtering liquids
Elément filtrant, notamment pour la filtration de liquides

(30) Priorität: 24.10.2001 DE 10152552
(43) Veröffentlichungstag der Anmeldung: 02.05.2003
(73) Patentinhaber: Mann + Hummel GmbH, 71638 Ludwigsburg (DE)
(72) Erfinder: Binder, Walter, 71522 Backnang (DE); Luka, Helmut, 71672 Marbach (DE); Strassenberger, Norbert, 84166 Adlkofen (DE); Vilsmaier, Gerhard, 84339 Unterdietfurt (DE); Huber, Matthäus, 94419 Reisbach (DE); Gottwald-Grill, Renate, 74321 Bietigheim-Bissingen (DE)
(74) Vertreter: Voth, Gerhard

(56) Entgegenhaltungen:
- WO-A-00/53285
- WO-A-97/41939
- WO-A-98/30310
- DE-A- 19 631 278
- DE-U- 29 704 360
- US-A- 5 071 456
- US-A- 5 484 466
- US-A- 5 718 825

## Beschreibung

### Stand der Technik

Die Erfindung betrifft ein Filterelement, insbesondere für die Filtrierung von Flüssigkeiten nach dem Oberbegriff des unabhängigen Anspruchs 1, sowie ein Filtersystem nach dem nebengeordneten Anspruch 6.

Ein Filterelement ist aus der GB 2 119 674 A bekannt. Dieses weist einen Stützkörper auf an dem ein zick-zack-förmig gefaltetes Filtermedium angeordnet ist. Das Filtermedium ist an den Stirnseiten mit Endscheiben verschlossen. Auf den Endscheiben sind Gummiprofildichtungen angeordnet. Ein Nachteil dieser Anordnung ist darin zu sehen, dass die Profildichtungen lediglich einen geringen Toleranzausgleich bewirken können und bei unsachgemäßem Einbau oder bei größeren Toleranzen des Gehäuses die zuverlässige Abdichtung nicht gewährleistet ist.

Es ist ferner aus der US PS 5 556 440 ein Filtersystem mit einer Dichtung bekannt, diese Dichtung ist ebenfalls als Profildichtung aufgebaut und unmittelbar in die Endscheibe integriert. Die Dichtkräfte dieser Radialdichtung wirken sich unmittelbar auf das Filtermedium aus und verursachen unter Umständen ein Aufreisen oder ein Lösen der Endscheibe an dem Filtermedium.

Zur Vermeidung einer solchen unbeabsichtigten Zerstörung ist es aus der US PS 5 484 466 bekannt, das Dichtungsprofil der Endscheibe so elastisch auszubilden, dass genügend Abstand zum Ausweichen der Dichtung vorgesehen ist. Dies führt allerdings dazu, dass das gewählte Dichtprofil eine sehr große Distanz überbrücken muss und unter Umständen keine ausreichende Zentrierung des Filterelements in einem Gehäuse erfolgt.

Aus der US PS 5 685 985 ist eine weitere Dichtungsstruktur für ein Filterelement bekannt, es handelt sich dabei ebenfalls um eine Radialdichtung die sich in axialer Richtung über das Filterelement erstreckt und an einem Dichtring anliegt. Auch dort besteht die Gefahr, dass die zentrische Führung des Filterelements durch die relativ labile Dichtung nicht gewährleistet ist.

Aus der US-A-5071456 und WO 00/53 285 sind weitere Dichtungsstrukturen fur ein Filterelement bekannt.

Der Erfindung liegt daher die Aufgabe zugrunde ein Filterelement, insbesondere für die Filtrierung von Flüssigkeiten, zu schaffen welches eine zuverlässige Abdichtung zwischen Rohflüssigkeits- und Reinflüssigkeitsbereich gewährleistet.

Diese Aufgabe wird durch die Merkmale des Anspruchs 1 gelöst.

### Vorteile der Erfindung

Der wesentliche Vorteil der Erfindung liegt darin, dass einerseits an dem Stützkörper im Bereich einer oder beider Endscheiben und mit diesen verbenden ein Dichtungsträger vorgesehen ist, welcher eine formschlüssig mit diesem verbundene Dichtung, insbesondere eine Elastomerdichtung trägt und der Dichtungsträger radial elastisch gestaltet ist. Durch diese Gestaltung wird die Elastizität der Dichtung erhöht, andererseits aber die zuverlässige Fixierung des Filterelements gewährleistet.

Weiterbildungsgemäß ist die Dichtung mit einem axialdichtungsfähigen Bereich versehen, damit zusätzlich zu der radialen Fixierung eine axiale Fixierung des Filterelements vorgenommen werden kann.

Eine weitere Ausgestaltung der Erfindung sieht vor, die Endscheibe aus Nitrilkautschuk herzustellen. Dieses Material hat eine hohe Temperatur- und Alterungsbeständigkeit und ist leicht verarbeitbar. Mit diesem Nitrilkautschuk kann sowohl die Stirnseite des Filtermediums als auch die Stirnseite des Stützkörpers umschlossen und abgedichtet werden.

Die Erfindung betrifft ferner ein Filtersystem, insbesondere zur Filtrierung von Flüssigkeiten. Dieses besteht aus einem Filtergehäuse, einem Zulauf für die Rohflüssigkeit, einem Ablauf für die Reinflüssigkeit und einem in dem Filtergehäuse angeordneten Filterelement. Das Filterelement weist ebenfalls einen radialelastischen Dichtungsträger auf, an welchem die Dichtung formschlüssig angeordnet ist. Das Filterelement ist an einem Anschlußstutzen, der sich am Reinflüssigkeitsablauf befindet lösbar befestigt.

### Zeichnung

Weitere Einzelheiten der Erfindung werden in der Zeichnung anhand von schematischen Ausführungsbeispielen beschrieben. Hierbei zeigen
- Figur 1 a-b: verschiedene Varianten eines Dichtungssystems,
- Figur 2 a-b: weitere Varianten eines Dichtungssystems,
- Figur 3: eine weitere Variante eines Dichtungssystems,
- Figur 4: ein komplettes Filtersystem in einer Schnittdarstellung.

### Beschreibung der Ausführungsbeispiele

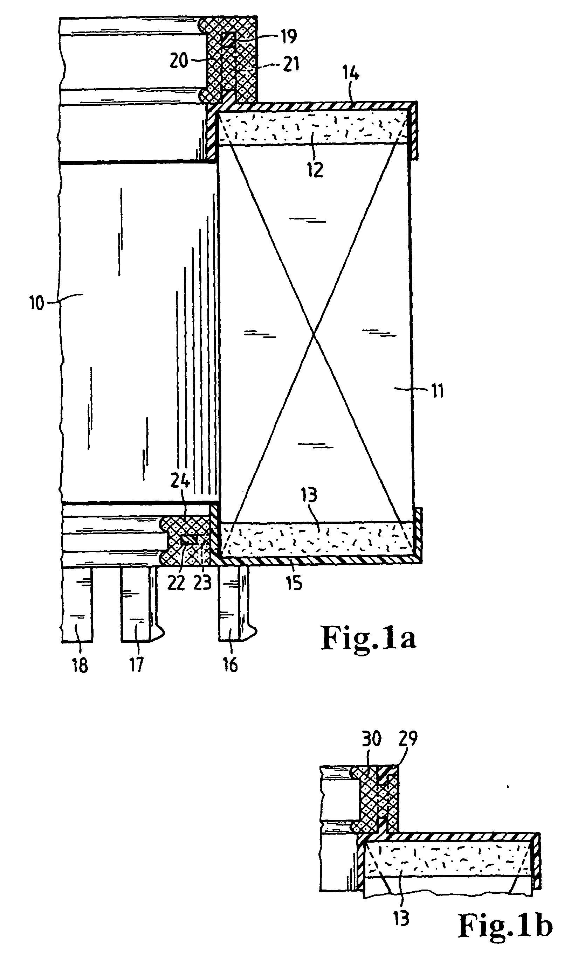

Figur 1a zeigt in einer Schnittdarstellung ein Filterelement, bestehend aus einem konzentrischen Stützkörper 10, einem auf dem Stützkörper angeordneten zick-zack-förmig gefalteten Filtermedium, insbesondere Filterpapier 11. Dieses Filterpapier ist an den Stirnseiten mit Kunststofffolien 12, 13 abgedichtet. Die Kunststofffolien werden umfaßt von Endscheiben 14, 15 aus thermoplastischen Kunststoff. An der Endscheibe 15 befinden sich Schnappelemente 16, 17, 18 mit welchen das Filterelement an einem hier nicht dargestellten Träger eingerastet werden kann. Die Endscheibe 14 ist mit einem axialgerichteten Steg 19 versehen. An diesen Steg ist eine Dichtung, insbesondere eine Elastomerdichtung 20 formschlüssig angespritzt. Der Steg 19 weist konzentrische Durchbrüche 21 auf, diese werden bei dem Herstellungsprozess der Dichtung mit ausgefüllt und bilden somit eine zuverlässige Verbindung zwischen Steg und Elastomerdichtung. An der Gegenüberliegenden Endscheibe ist ein radial nach innen gerichteter Steg 22 vorgesehen.

Auch dieser ist mit konzentrischen Öffnungen 23 ausgestattet und wird von einer Elastomerdichtung 24 umschlossen.
Figur 1b zeigt eine weitere Dichtungsträgervariante. Der Dichtungsträger ist ein Steg 29 der ebenfalls Öffnungen aufweist damit die Profildichtung 30 zuverlässig befestigt werden kann.

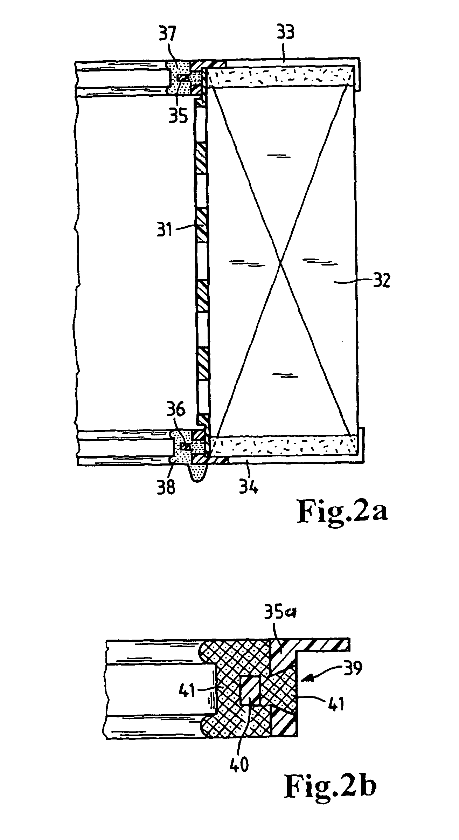

Figur 2a zeigt in einem Teilschnitt einen Stützkörper 31 der wiederum ein Filterelement 32 trägt. Das Filterelement ist über entsprechende Klebverbindungen mit Kunststoffendscheiben 33, 34 an den Stirnseiten abgedichtet. Die Kunststoffendscheiben tragen radial gerichtete Dichtungsaufnahmen 35, 36. Diese Dichtungsaufnahmen sind mit den Dichtungen 37, 38 umspritzt.
Figur 2b zeigt eine Detaildarstellung der Dichtungsaufnahme 35a diese weist, am Umfang verteilt, Durchbrüche 39 auf sowie die Durchbrüche begrenzende Stege 40. Beim Umspritzen der Stege und der Durchbrüche mit der Dichtungsmasse 41 ergibt sich eine formschlüssige Verbindung zwischen der Dichtungsaufnahme 35 und der Dichtungsmasse. Durch entsprechende Ausgestaltung der Stege 40 können diese die Radialelastizität der Dichtung verbessern.

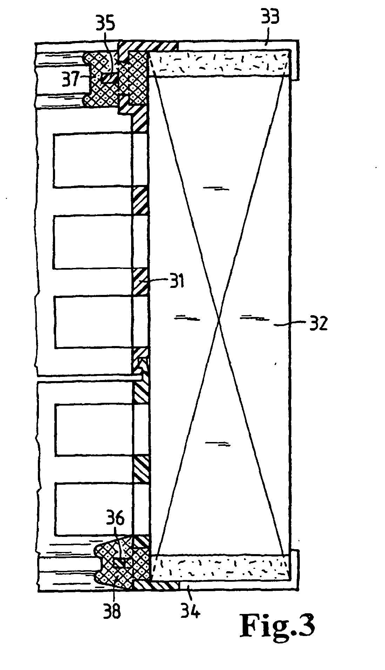

Figur 3 zeigt in einem Teilschnitt einen Stützkörper 31 der wiederum ein Filterelement 32 trägt. Das Filterelement ist über entsprechende Klebverbindungen mit Kunststoffendscheiben 33, 34 an den Stirnseiten abgedichtet. Die Kunststoffendscheiben tragen radial gerichtete Dichtungsaufnahmen 35, 36. Diese Dichtungsaufnahmen sind mit den Dichtungen 37, 38 umspritzt.

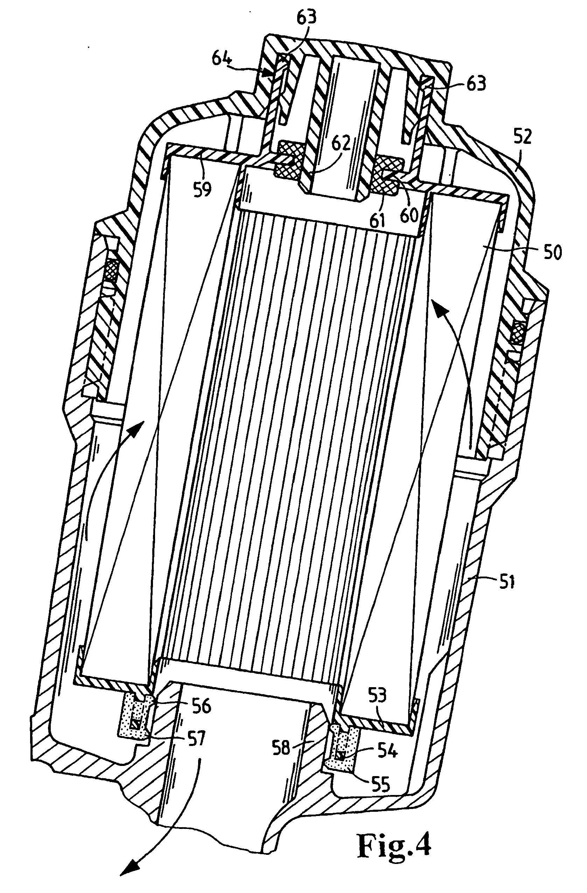

Figur 4 zeigt ein komplettes Filtersystem in einer Schnittdarstellung. Ein Filterelement 50 ist in einem Gehäuse 51 angeordnet, dieses Gehäuse 51 ist mit einem Deckel 52 versehen. Das Filterelement 50 weist eine untere Endscheibe 53 auf. Diese Endscheibe ist mit einem konzentrischen Steg 54 versehen, welcher mit einem Elastomer 55 umspritzt ist. Die durch das Elastomer 55 gebildete Dichtung liegt mit einem ersten Dichtrand 56 und einem zweiten Dichtrand 57 an einem Stutzen 58 an. An der Gegenüber liegenden Seite des Filterelements 50 befindet sich eine Endscheibe 59. Diese ist mit einem radial nach innen gerichteten Steg 60 versehen. Auch dieser Steg ist mit einem Elastomer 61 umspritzt und dichtet über eine Zylinderwand 62 am Deckel 52 ab. An der Endscheibe 59 befinden sich Rastelemente 63, diese greifen in Rastöffnungen 64 des Deckels ein und schaffen so eine lösbare Verbindung von Deckel 52 und Filterelement 50. Der Deckel 52 ist über ein Schraubgewinde mit dem Gehäuse 51 verbunden. Beim Öffnen des Deckels, daß heißt beim Abschrauben des Deckels wird das Filterelement aus dem Gehäuse mit herausgezogen. Nach dem vollständigen Öffnen kann das Filterelement aus dem Deckel ausgeklipst werden und ein neues Filterelement läßt sich in das Gehäuse einsetzen. Selbstverständlich besteht die Möglichkeit, beispielsweise innerhalb des zylindrischen Dichtelements 62 ein Überdruck oder Umgehungsventil anzuordnen, dies ist jedoch allgemein bekannt und wird hier nicht näher erläutert.

## Patentansprüche

1. Filterelement, insbesondere für die Filtrierung von Flüssigkeiten, bestehend aus einem konzentrischen Stützkörper (10, 31), einem Insbesondere zlck-zack-förmig gefalteten und an dem konzentrischen Stützkörper angeordneten Filtermedium (11, 32) sowie an den Stirnseiten des Fllteffnedlum,3 angeordneten Endscheiben (14, 15, 33, 34) wobei die Endscheiben mit dem Flitermedlum verklebt oder verschweißt sind, und wobei an den Stützkörper (10, 31) im Bereich einer oder beider Endscheiben (14, 15, 33, 34) und mit diesen verbunden ein Dichtungsträger vorgesehen Ist welcher eine formschlüssig mit diesem verbundenen Dichtung (20, 24, 30, 37, 38, 41, 55), insbesondere eine Elastomerdichtung, aufweist, und wobei der Dichtungsträger radialelastisch gestaltet ist und der Dichtungsträger am Umfang verteilte Durchbrüche (21, 23, 39) sowie die Durchbrüche begrenzende Stege (19, 29, 35, 36, 40, 54) aufweist.

2. Filterelement nach Anspruch 1, wobei die Dichtung einen axialdichtungsfähigen Bereich aufweist

3. Filterelement nach einem der vorherigen Ansprüche, wobei wenigstens eine Endscheibe aus Nitrilkautschuk besteht und den Stützkörper an der Stirnseite umschließt.

4. Filtersystem, insbesondere zur Filtrierung von Flüssigkeiten, bestehend aus einem Filtergehäuse (51), einem Zulauf für die Rohflüssigkeit, einem Ablauf für die Reinflüssigkeit, wobei in dem Filtergehäuse ein Filterelement nach Anspruch 1 eingeordnet ist.

## Revendications

1. Élément filtrant, en particulier pour la filtration de liquides, composé d'un corps d'appui concentrique (10, 31), d'un milieu filtrant (11, 32) plié en particulier en forme de zigzag et installé sur le corps d'appui concentrique, ainsi que de disques d'extrémité (14, 15, 33, 34) disposés sur les faces frontales du milieu filtrant,
dans lequel
les disques d'extrémité sont collés ou soudés avec le milieu filtrant, et un support de joint prévu sur le corps d'appui (10, 31) au niveau de l'un ou des deux disques d'extrémité (14, 15, 33, 34) et relié à ceux-ci, présente un joint (20, 24, 30, 37, 38, 41, 55), en particulier un joint en élastomère, relié par complémentarité de forme à ceux-ci, le support de joint étant plié de manière radialement élastique et présentant des passages (21, 23, 39) répartis à la périphérie ainsi que des nervures (19, 29, 35, 36, 40, 54) délimitant les passages.

2. Elément filtrant selon la revendication 1,
dans lequel
le joint présente une zone étanche axialement.

3. Elément filtrant selon l'une des revendications précédentes,
dans lequel
au moins un disque d'extrémité est composé de caoutchouc nitrile et entoure le corps d'appui au niveau de la face frontale.

4. Système de filtration, en particulier pour la filtration de liquides, composé d'un boîtier de filtration (54), d'une admission pour le liquide brut, d'une évacuation pour le liquide pur,
dans lequel
un élément filtrant selon la revendication 1 est installé dans le boîtier de filtration.

## Claims

1. Filter element, more especially for the filtering of liquids, said filter element comprising a concentric support body (10, 31), a filtering medium (11, 32) that is more especially folded in a zigzag manner and is disposed on the concentric support body, and end discs (14, 15, 33, 34) that are disposed at the end faces of the filtering medium, wherein the end discs are adhered or welded to the filtering medium, and wherein a seal carrier is provided on the support body (10, 31) in the region of one or both of the end discs (14, 15, 33, 34) and is connected to said end discs, the said seal carrier including a seal (20, 24, 30, 37, 38, 41, 55), more especially an elastomer seal, which is connected to the seal carrier in a form-fitting manner, and wherein the seal carrier is radially resilient and the seal carrier includes openings (21, 23, 39) distributed around the circumference and webs (19, 25, 35, 36, 40, 54) defining the openings.

2. Filter element according to claim 1, wherein the seal includes a region that can be axially sealing.

3. Filter element according to one of the previous claims, wherein at least one end disc is produced from nitrile rubber and encloses the support body at the end face.

4. Filter system, more especially for the filtering of liquids, said filter system comprising a filter housing (54), an inlet for the unfiltered liquid and an outlet for the filtered liquid, wherein a filter element according to claim 1 is installed in the filter housing.
